# EUROPEAN PATENT APPLICATION

(11) **EP 4 583 395 A1**
(43) Date of publication of application: **09.07.2025**
(21) Application number: 25150783.6
(22) Date of filing: 08.01.2025
(51) Int. Cl.: H02P 3/04, F16D 59/02, H02K 7/102

(54) **SELF BRAKING BLDC MOTOR**

(30) Priority: 08.01.2024 IN 202411001374; 01.11.2024 US 202418935121
(71) Applicant: B/E Aerospace, Inc., Winston-Salem, NC 27105 (US)
(72) Inventor: KAPPA VENKATA, Suresh Babu, 560049 Bengaluru (IN); ANNUMANDLA, Srikanth, 500019 Hyderabad (IN); PROCTOR, Russell, Advance 27006 (US)
(74) Representative: Dehns

(57) **Abstract**

A device may include a rotor (304) and a stator (116) comprising a plurality of stator windings (120). A device may include at least one motor brake (132) comprising at least one brake winding (140), wherein the at least one motor brake (132) is configured to move between a disengaged position when the at least one brake winding (140) is energized, and an engaged position when the at least one brake winding (140) is de-energized, wherein the at least one motor brake (132) inhibits a rotation of the rotor (304) when in the engaged position. A device may include a drive circuit (112) configured to deliver the power from the power source (108) to the stator (116) and to the at least one brake winding (140), wherein the drive circuit (112) is configured to deliver power to the at least one brake winding (140), wherein the at least one brake winding (140) is energized when the stator (116) is energized.

## Description

### CROSS-REFERENCE TO RELATED APPLICATION

The present application claims the benefit of India Provisional Application No. 202411001374, filed January 8, 2024, which is incorporated herein by reference in the entirety.

### BACKGROUND

Brushless direct current (BLDC) motors are used to power actuators in a variety of applications, including powering actuators in passenger seats. One problem with BLDC motors is their propensity to rotate or "freewheel" when power to the BLDC motor is turned off. To address freewheeling, additional mechanisms, such as stepper motors, are used to engage and disengage mechanical brakes for BLDC-driven systems. However, the addition of a stepper motor requires additional space and additional hardware/software to support and maintain the stepper motor. Also, frequent use of the stepper motor may cause electrical overstress in the electronics controlling the stepper motor and may damage control electronic componentry such as diode bridge circuitry. Therefore, there is a need for BLDC motors to have an inbuilt capability or mechanism developed within that can mitigate the above issues and address freewheeling.

### SUMMARY

According to a first aspect of the invention there is provided a system, including: An electric motor including: a rotor; a stator including: a ring-shaped body: a plurality of stator poles coupled to the ring-shaped body; and a plurality of stator windings, wherein each of the stator windings is wound about a corresponding one of the stator poles wherein the stator is configured to be energized from a power source and operable, upon receiving power, to generate a rotating magnetic field that causes the rotor to rotate; at least one motor brake including at least one brake winding, wherein the at least one motor brake is configured to move between a disengaged position when the at least one brake winding is energized, and an engaged position when the at least one brake winding is de-energized, wherein the at least one motor brake inhibits a rotation of the rotor when in the engaged position; and a drive circuit configured to deliver the power from the power source to the stator and to the at least one brake winding, wherein the drive circuit is configured to deliver power to the at least one brake winding, wherein the at least one brake winding is energized when the stator is energized, wherein the at least one brake winding is de-energized when the stator is de-energized.

Optionally, the drive circuit delivers three phases of current to the stator and the at least one brake winding, wherein the at least one brake winding is energized from the input DC supply.

Optionally, the at least one motor brake further includes at least one override winding, wherein the at least one motor brake is configured to move between the disengaged position when the at least one override winding is de-energized, and the engaged position when the at least one override winding is energized, wherein when the at least one override winding is energized, the at least one override winding prevents the motor brake from inhibiting the rotation of the rotor.

Optionally, further including an override switch, wherein an activation of the switch causes the at least one override winding to energize.

Optionally, the override switch is configured to be activated manually.

Optionally, the motor brake includes a solenoid actuator.

Optionally, the motor brake further includes a biasing arrangement configured to provide a force that inhibits the rotation of the rotor when the motor brake is in the engaged position.

Optionally, the biasing arrangement includes a spring.

Optionally, the system includes an inrunner electric motor.

Optionally, the at least one motor brake provides a biasing force directly against the rotor.

Optionally, the at least one motor brake is coupled to the stator.

Optionally, the at least one motor brake provides a biasing force directly against the rotor.

Optionally, the system includes a brushless direct current motor.

According to a second aspect of the invention there is provided a method including: supplying power to a drive circuit, wherein the drive circuit delivers the power to a stator, wherein the stator is energized from receiving the power, causing the stator to bias a rotor to rotate; and delivers power to at least one solenoid actuator of at least one motor brake, wherein the at least one solenoid actuator is energized, causing the solenoid actuator to bias a motor brake to a disengaged position, enabling a rotation of the rotor.

Optionally, further including interrupting power to the drive circuit, wherein interrupting power to the drive circuit: causes the stator to de-energize; and causes the at least one solenoid actuator to de-energize, causing the solenoid actuator to bias the motor brake to an engaged position, thereby inhibiting the rotation of the rotor.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 illustrates a block diagram of a system that includes an electric motor.
FIG. 2 illustrates a partial schematic of the system.
FIG. 3 illustrates a plan view of a stator encompassing a spinning rotor.
FIG.4A illustrates a plan view of a stator encompassing a spinning rotor, the rotor including a solenoid actuator, and brake pads placed in a disengaged position.
FIG. 4B illustrates a plan view of a stator encompassing a non-spinning rotor, the rotor including a solenoid actuator and brake pads in an engaged position.
FIG. 5 illustrates a graph of three trapezoidal phases of a direct current used to power an electric motor.
FIG. 6 illustrates a method for operating a motor brake of an electric motor.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present), and B is false (or not present), A is false (or not present), and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of sub-combination of two or more such features, along with any other features which may not necessarily be expressly described or inherently present in the instant disclosure.

Broadly, embodiments of the inventive concepts herein are directed to an electric motor, such as a brushless direct current (BLDC) motor, that has a self-braking system that applies a brake, such as a plunger (e.g., a solenoid rod), to the rotor when power to the electric motor (e.g., power to a stator within the electric motor) has ceased. The braking system includes a solenoid actuator that is disengaged (e.g., not braking) when the solenoid actuator is energized and engages the rotor (e.g., applying frictional braking force) when the solenoid actuator is de-energized. The circuitry is configured so that whenever a motor is energized, windings in the solenoid actuator are also energized as they are connected as parallel loads along with the motor (e.g., the motor and all brake solenoids are parallel loads and whenever power is supplied to the motor, current also flows through the solenoid). When the current flows through the solenoid actuator, the plunger of the solenoid actuator is pulled away from the rotor, disengaging the brake from the rotor. Therefore, the self-braking system does not need external control, as power to the motor and to the brake are supplied as parallel loads. This self-braking DC motor may be implemented in any mechanical systems that require arresting of the freewheeling, in cases such as in the articulation of a passenger seat of an aircraft.

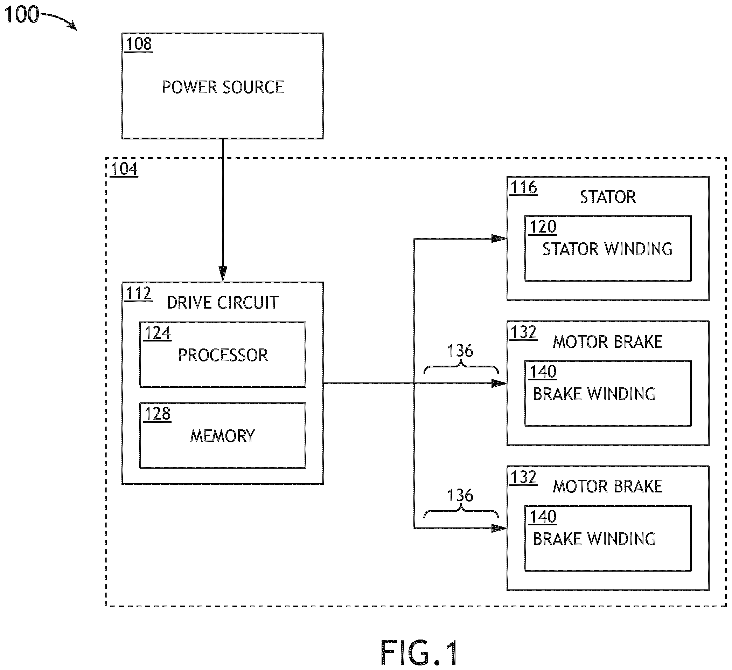

Referring to FIG. 1, a system 100 is disclosed that includes an electric motor 104. The system 100 may include any type of electric motor 104 including, but not limited to, a brushless direct current (DC) motor, a brushed DC motor, an alternating current (AC) brushless motor, an AC brushed motor, linear motors, servo motors, and stepper motors. For example, the system 100 may include a brushless direct current motor (BLDC), as shown in FIG. 1. The electric motor 104 may comprise an inrunner (e.g., rotor inside stator) or outrunner (e.g., rotor outside stator) style of BLDC. The electric motor 104 may comprise single-phase, single-phase, two-phase, or three-phase wiring. For example, the electric motor may be configured as an inrunner three-phase BLDC. The electric motor may be sensored or sensorless, and may have a single pole or multiple poles, and may use a trapezoidal or sinusoidal power signal.

In embodiments, the system 100 includes a power source 108 that powers the electric motor 104. The electric motor may be coupled to a portable power source 108 (e.g., a battery) or an external power source 108 (power coming in from an electric line).

In embodiments, the system 100 includes a drive circuit 112 and a stator 116. The drive circuit 112 delivers power to a stator 116 (e.g., to one or more stator windings 120, or coils, of the stator 116) in a controlled manner. The drive circuit 112 may include one or more processors 124 that controls the flow of power to the stator 116 and at least one memory 128. The system 100 may include more than one drive circuit 112.

In embodiments, the electric motor 104 includes a motor brake 132 and circuit componentry 136 (e.g., current limiters). The motor brake 132 is configured to inhibit the rotation of a rotor relative to the stator 116. The motor brake 132 includes brake windings 140 (e.g., solenoid windings) that, along with the stator windings 120, are connected as parallel loads. Therefore, when the power is supplied to the stator windings 120, power is also supplied to the brake windings 140. Similarly, during normal operation, when power is not supplied to the stator windings 120, power is also not supplied to the brake windings 140.

The at least one processor 124 may be implemented as any suitable processor(s), such as at least one general purpose processor, at least one central processing unit (CPU), at least one image processor, at least one graphics processing unit (GPU), at least one field-programmable gate array (FPGA), and/or at least one special purpose processor configured to execute instructions for performing (e.g., collectively performing if more than one processor) any or all of the operations disclosed throughout. Functions of the one or more processors include, but are not limited to, receiving indications of the direction and speed of the rotor, and controlling the flow of power (e.g., current) to the stator windings 120, (e.g., which provides power to the solenoid windings 140).

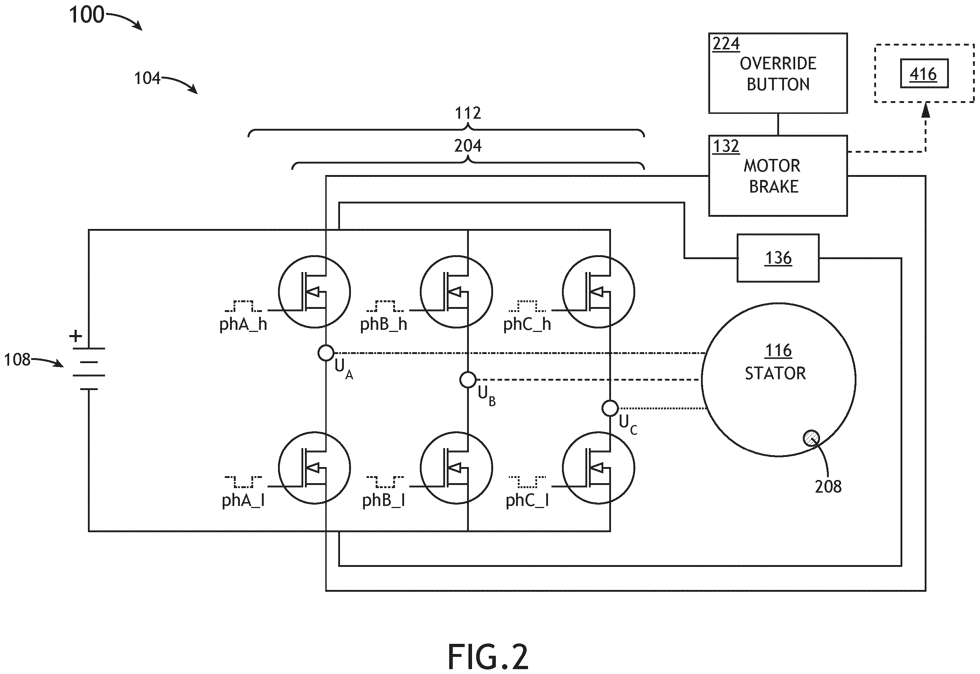

As shown in FIG. 2, the drive circuit 112 includes a set of transistors 204 electrically coupled to the one or more processors 124 and the stator 116 that deliver three-phase power to the stator windings 120. The one or more transistors 204 may include any type of transistors including but not limited to depletion mode transistors, enhancement mode transistors, field-effect transistors (FETs), metal-oxide-semiconductor FETs (MOSFETs), N-type transistors, P-type transistors. For example, the one or more transistors 204 may include enhancement mode MOSFETs. The stator 116 may include one or more sensors 208 (e.g., magnetic pole sensors, hall-effect sensors) in communication with the one or more processors 124. The one or more sensors 208 detect an angle of the rotor and sends this information to the one or more processors 124. The one or more processors 124 then control the switching of the set of transistors 204, causing a sequence of on/off switching of the set of stator windings 120, which control the direction of torque applied to the rotor.

As shown in FIG, 2, the drive circuit 112 is electrically coupled to both the electric stator 116 and the motor brake 132 (e.g., via the stator windings 120 and the brake windings 140). The stator windings 120 receive power from one or more of the three phases of power (e.g., A, B, and C) delivered by the drive circuit 112 and the brake windings 140 receive power directly from DC power supply (e.g., the same supply which is given to the bridge).

In embodiments, the motor brake 132 includes and/or incorporates a solenoid actuator 220 (e.g., a push-pull solenoid actuator, or other type of solenoid actuator). The solenoid actuator 220 includes a plunger (e.g., a solenoid rod 416) and/or brake pad that acts as the physical brake for the motor brake 132 and further includes or incorporates the one or more motor brake windings 140. When the motor brake windings 140 becomes energized (e.g., current flowing through), the solenoid actuator biases the plunger into a disengaged position (e.g., non-braking position). When the motor brake windings 140 become de-energized, the plunger is biased into an engaged, braking position via a spring or other biasing mechanism.

In some embodiments, the motor brake 132 further includes an override assembly 224 configured to counter the braking of the plunger under emergency or atypical working conditions. The override assembly may include an overriding winding that biases the plunger from the engaged position to a disengaged position. The override winding may resemble or work similarly to the motor brake winding. The override winding may be powered by the power source 108 or other external power sources. The override assembly 224 may be triggered (e.g., electrically energized) automatically or manually. For example, the override assembly 224 may be triggered via an override button or other physical switch.

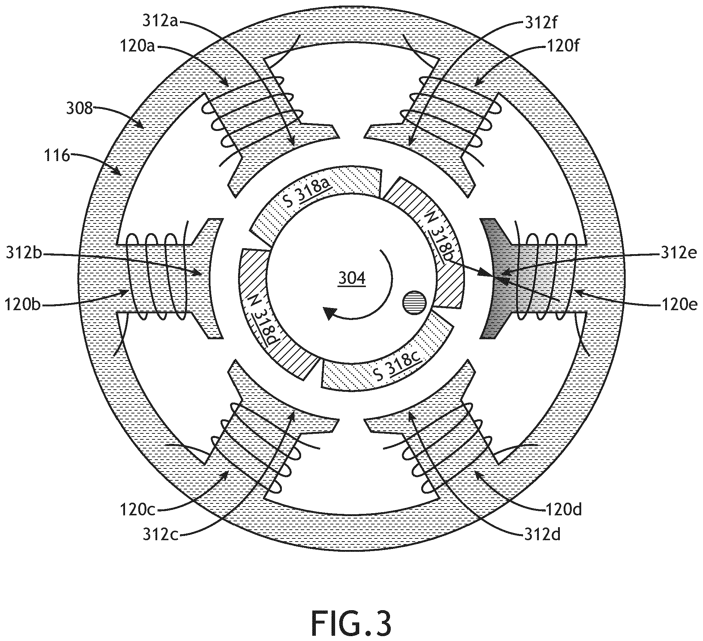

An example of the stator 116, stator windings 120a-f, and rotor 304 is shown in FIG. 3. The stator 116 further includes a ring-shaped body 308 and stator poles 312a-f (e.g., stator posts). The rotor 304 includes a set of permanent magnets containing a pluarlity of poles 318 and rotates radially relative to the immobile stator 116 The motor windings 120a-f are wound around their respective stator poles 312a-f. The stator windings 120a-f are electrically energized in a coordinated fashion, resulting in an electromagnetic force that repels one or more stators 312 (e.g., such as 312e repelling pole 318b in FIG, 3), resulting in rotation of the rotor 304. The stator 116 is therefore configured to be energized from the power source 108 and operable, upon receiving power, to generate a rotating magnetic field that causes the rotor 304 to rotate;

The electric motor 104 may have any arrangement or number of stator poles 312a-b and rotor poles 318. For example, the electric motor may include 4 rotor poles 318 and 6 stator poles 312a-b. In another example, the electric motor 104 may include three stator poles 312a-b for every two rotor poles (e.g., a 3:2 ratio). In another example, the electric motor 104 may include 2, 4, 6, 8, 10, or more than 10 stator poles 312a-b or rotor poles 318. In another example, the electric motor 104 may include more than 10, more than 20, more than 40, more than 80, or more than 160 stator poles 312a-b or rotor poles 318.

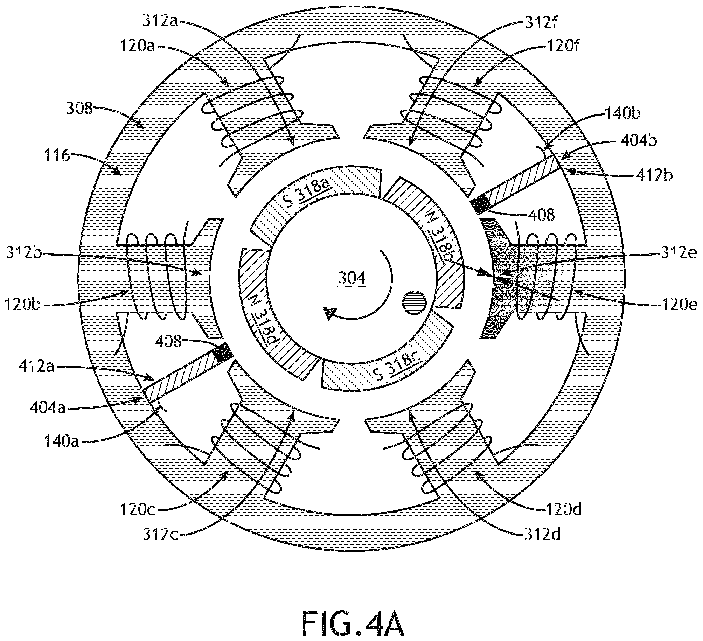

FIG. 4A illustrates a motor brake 132 for the electric motor 104 that includes one or more solenoid actuators 404a-b coupled to the ring-shaped body 308 of the stator 116. The solenoid includes the brake winding 140a-b and may include a brake pad 408a-b that extends from a cylinder 412a-b. As shown, the motor brake 132 in FIG 4A is disengaged, as the brake pads 408a-b are not pressed against the rotor 304. As described herein, the motor brake 132 is disengaged when power (e.g., current) is flowing through at least one stator winding 120 (e.g., energizing the stator 116). During this time of disengagement, current is also flowing through the brake windings 140a-b, causing the brake pad 408a-b to forcibly retract to the disengaged position.

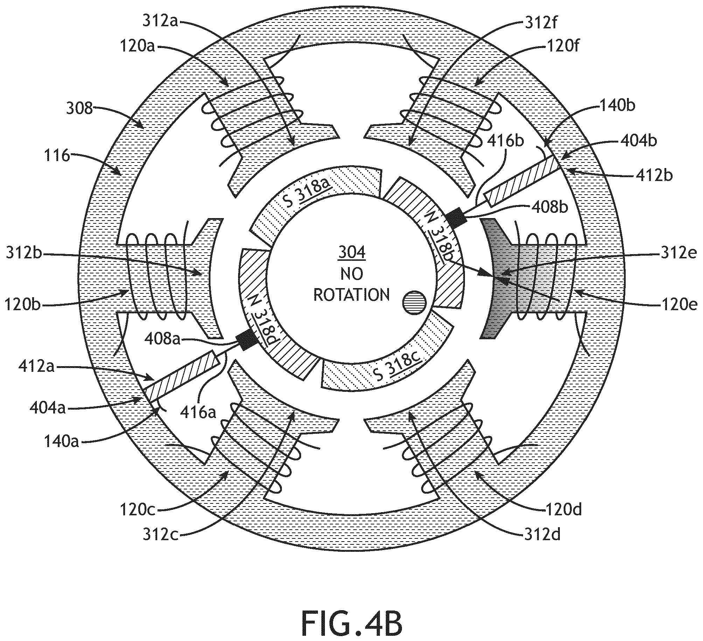

FIG. 4B illustrates the motor brake 132 FIG. 4A, with both the stator windings 120a-e and the brake windings 140 of the solenoid 404a-b non-energized. As shown, in a de-energized state, the solenoid actuators 404a-b no longer keep the brake pads 408a-b in the disengaged position. Springs, or other biasing elements incorporated in the cylinder 412a-b provide a biasing force (e.g., a push) that pushes a solenoid rod 416a-b out of the cylinder 412a-b (e.g., directly against the rotor 304). The biasing force also causes the brake pads to push up against the rotor 304, inhibiting the rotor from rotating.

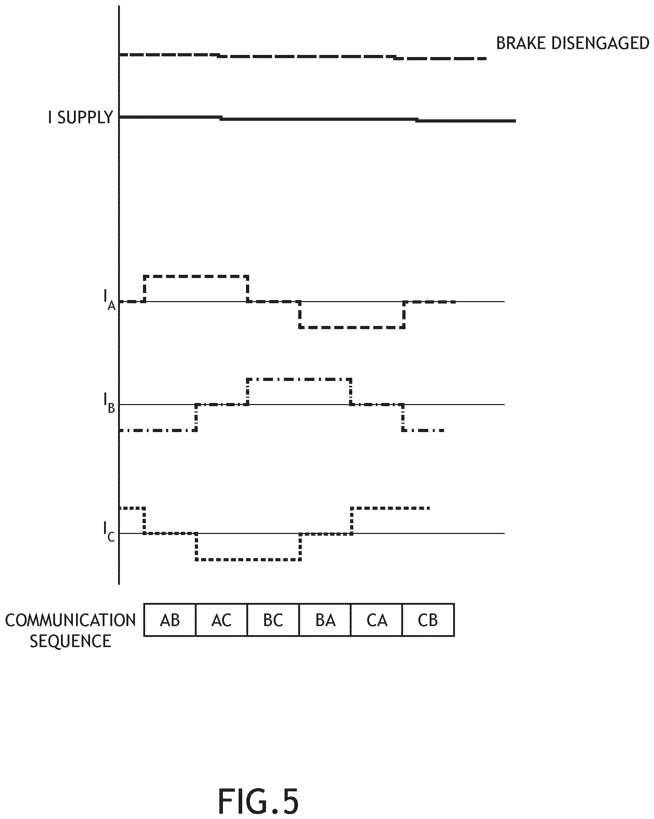

As shown in FIG. 5, the trapezoidal phases A, B, and C, (currents I_{A}, I_{B}, and I_{C}) of the electric motor 104 of FIG. 3 shown. These phases are passed on to the stator 116 (e.g., to the stator windings 120a-f). Because power is supplied to the stator windings 120 and the brake windings 140 in parallel, at any point in time, a positive current is going through the motor brake windings 140a-b, activating and energizing the solenoid, which disengages the motor brake 132, allowing the rotor to rotate without inhibition by the brake pad 408a-b. Because the supply of current to the stator 116, and therefore the motor brake 132, is constant, the motor brake 132 is constantly disengaged.

The motor brake 132 can be positioned at any place within the electric motor 104 that permits the brake pad 408a-b to inhibit the rotor 304 and is therefore not limited to a position upon the stator 116. For example, the motor brake 132 (e.g., the solenoid 408b may be positioned on a frame, or other immobile (e.g., relative to the rotor 304) part of the electric motor 104. Further, the brake pads 408a-b may be placed at positions other than the rotor 304 that act indirectly to inhibit the rotation of the rotor 304. For example, the motor brake 132 may be positioned so that the brake pads 408a-b come into contact with a gear (e.g., reduction gear), or shaft powered by the rotor 304. Therefore, the above description should not be interpreted as a limitation on the present disclosure but merely an illustration.

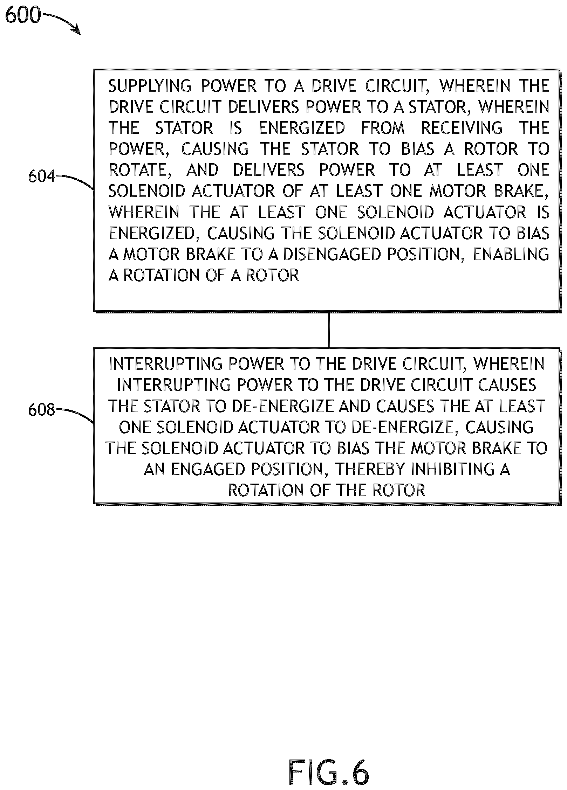

FIG. 6 illustrates a method 600 for operating the motor brake 132 of the electric motor 104, in accordance with one or more embodiments of the disclosure. The method may be implemented on any type of electric motor 104 described herein, including BLDC motors.

In embodiments, the method 600 includes a step 604 of supplying power to a drive circuit, wherein the drive circuit delivers power to the stator 116, wherein the stator 116 is energized from receiving the power, causing the stator 116 to bias a rotor 304 to rotate, and delivers power to at least one solenoid actuator 404a-b of at least one motor brake 132, wherein the at least one solenoid actuator 404a-b is energized, causing the solenoid actuator 404a-b to bias the motor brake 132 to a disengaged position, enabling a rotation of a rotor 304. As shown in FIG. 4B, in the initial state of the electric motor 104, no power is flowing through either the stator 116 (e.g., any of the stator windings 120a-f), or the motor brake windings 140a-b, and the brake pads 408a-b are biased against the rotor 304 (e.g., via a spring or other mechanism), inhibiting rotation. Upon the supplying of power to both the stator windings (controlled) and the motor windings, the solenoid actuator 404a-b is energized, and the motor brake 132 (e.g., the brake pads 408a-b) is moved from the engaged position to the disengaged position, as shown in FIG. 4A.

In embodiments, the method includes a step 608 of interrupting power to the drive circuit, wherein interrupting power to the drive circuit causes the stator to de-energize and causes the at least one solenoid actuator to de-energize, causing the solenoid actuator to bias the motor brake to an engaged position, thereby inhibiting a rotation of the rotor. As shown in FIG, 4A, a running electric motor 104 energizes both the stator 116 and the solenoid actuator 404a-b energize, which simultaneously biases the brake pads 408a-b away from the rotor 304 and causes the rotor 304 to rotate. Interruption of power to the electric motor 104 subsequently causes both the stator 116 to stop biasing the rotor 304 to rotate and causes the de-energized solenoid actuator 404a-b to extend the rod 416a-b (e.g., via the spring or other biasing element), which biases the brake pads 408a-b against the rotor 304, inhibiting the rotation of the rotor 304. The action of the brake pads 408a-b against the rotor 304 prevents freewheeling of the rotor 304, resulting in a more controlled and accurate rotation of the rotor 304.

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, equivalents may be employed, and substitutions made herein without departing from the scope of the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

As used throughout and as would be appreciated by those skilled in the art, "at least one non-transitory computer-readable medium" may refer to as at least one non-transitory computer-readable medium (e.g., e.g., at least one computer-readable medium implemented as hardware; e.g., at least one non-transitory processor-readable medium, at least one memory (e.g., at least one nonvolatile memory, at least one volatile memory, or a combination thereof; e.g., at least one random-access memory, at least one flash memory, at least one read-only memory (ROM) (e.g., at least one electrically erasable programmable read-only memory (EEPROM)), at least one on-processor memory (e.g., at least one on-processor cache, at least one on-processor buffer, at least one on-processor flash memory, at least one on-processor EEPROM, or a combination thereof), or a combination thereof), at least one storage device (e.g., at least one hard-disk drive, at least one tape drive, at least one solid-state drive, at least one flash drive, at least one readable and/or writable disk of at least one optical drive configured to read from and/or write to the at least one readable and/or writable disk, or a combination thereof), or a combination thereof).

As used throughout, "at least one" means one or a plurality of; for example, "at least one" may comprise one, two, three, ..., one hundred, or more. Similarly, as used throughout, "one or more" means one or a plurality of; for example, "one or more" may comprise one, two, three, ..., one hundred, or more. Further, as used throughout, "zero or more" means zero, one, or a plurality of; for example, "zero or more" may comprise zero, one, two, three, ..., one hundred, or more.

## Claims

1. A system (100), comprising:
an electric motor (104) comprising:
a rotor (304);
a stator (116) comprising:
a ring-shaped body (308):
a plurality of stator poles (312) coupled to the ring-shaped body; and
a plurality of stator windings (120), wherein each stator winding (120a-f) of the plurality of stator windings is wound about a corresponding stator pole (312a-f) of the plurality of stator poles, wherein the stator is configured to be energized from a power source (108) and operable, upon receiving power, to generate a rotating magnetic field that causes the rotor to rotate;
at least one motor brake (132) comprising at least one brake winding (140), wherein the at least one motor brake is configured to move between a disengaged position when the at least one brake winding is energized, and an engaged position when the at least one brake winding is de-energized, wherein the at least one motor brake inhibits a rotation of the rotor when in the engaged position; and
a drive circuit (112) configured to deliver the power from the power source to the stator and to the at least one brake winding, wherein the drive circuit is configured to deliver power to the at least one brake winding, wherein the at least one brake winding is energized when the stator is energized, wherein the at least one brake winding is de-energized when the stator is de-energized.

2. The system of claim 1, wherein the drive circuit delivers three phases of current to the stator and the at least one brake winding, wherein the at least one brake winding is energized upon receiving one or more phases of current.

3. The system of claim 1 or 2, wherein the at least one motor brake further includes at least one override winding, wherein the at least one motor brake is configured to move between the disengaged position when the at least one override winding is de-energized, and the engaged position when the at least one override winding is energized, wherein when the at least one override winding is energized, the at least one override winding prevents the at least one motor brake from inhibiting the rotation of the rotor.

4. The system of claim 3, further comprising an override switch, wherein an activation of the override switch causes the at least one override winding to energize.

5. The system of claim 4, wherein the override switch is configured to be activated manually.

6. The system of any preceding claim, wherein the at least one motor brake comprises a solenoid actuator (220, 404).

7. The system of claim 6, wherein the at least one motor brake further comprises a biasing arrangement configured to provide a force that inhibits the rotation of the rotor when the at least one motor brake is in the engaged position.

8. The system of claim 7, wherein the biasing arrangement comprises a spring.

9. The system of any preceding claim, wherein the system comprises an inrunner electric motor.

10. The system of any preceding claim, wherein the at least one motor brake provides a biasing force directly against the rotor.

11. The system of any preceding claim, wherein the at least one motor brake is coupled to the stator.

12. The system of any preceding claim, wherein the at least one motor brake provides a biasing force indirectly against the rotor.

13. The system of any preceding claim, wherein the system comprises a brushless direct current motor.

14. A method comprising:
supplying (604) power to a drive circuit (112), wherein the drive circuit:
delivers the power to a stator (116), wherein the stator is energized from receiving the power, causing the stator to bias a rotor (304) to rotate; and
delivers power to at least one solenoid actuator (220, 404) of at least one motor brake (132), wherein the at least one solenoid actuator is energized, causing the at least one solenoid actuator to bias a motor brake (132) to a disengaged position, enabling a rotation of the rotor.

15. The method of claim 14, further comprising interrupting (608) power to the drive circuit, wherein interrupting power to the drive circuit:
causes the stator to de-energize; and
causes the at least one solenoid actuator to de-energize, causing the at least one solenoid actuator to bias the at least one motor brake to an engaged position, thereby inhibiting the rotation of the rotor.
